# EUROPÄISCHE PATENTSCHRIFT

(11) **EP 2 964 138 B1**
(45) Veröffentlichungstag und Bekanntmachung des Hinweises auf die Patenterteilung: **10.04.2019**
(21) Anmeldenummer: 14706058.6
(22) Anmeldetag: 25.02.2014
(51) Int. Cl.: A61C 13/00, A61C 13/07

(54) **ZAHNPROTHESE MIT BEFESTIGUNGSVORRICHTUNG**
DENTAL PROSTHESIS WITH FASTENING DEVICE
PROTHÈSE DENTAIRE AVEC DISPOSITIF DE FIXATION

(30) Priorität: 08.03.2013 DE 102013102357
(43) Veröffentlichungstag der Anmeldung: 13.01.2016
(73) Patentinhaber: BREDENT GMBH & CO. KG, 89250 Senden (DE)
(72) Erfinder: MIELECKE, Peter, 89077 Ulm (DE); BREHM, Peter, 89250 Senden (DE)
(74) Vertreter: Baur & Weber Patentanwälte PartG mbB
(86) Internationale Anmeldenummer: PCT/EP2014/053606
(87) Internationale Veröffentlichungsnummer: WO 2014/135395

(56) Entgegenhaltungen:
- EP-A1- 2 676 633
- US-A- 3 327 392
- US-A1- 2004 020 597

## Beschreibung

Die Erfindung betrifft eine Zahnprothese mit einer Befestigungsvorrichtung, insbesondere eine Befestigungsvorrichtung, bei der die Haftkraft der Zahnprothese eingestellt ist.

Bei älteren Menschen tritt häufiger ein Totalverlust der Zähne ein. Um diesen Zustand zu beheben, werden oftmals Totalprothesen eingesetzt. Alte zahnlose Menschen haben jedoch große Probleme mit ihrer Ernährung, da die Totalprothese häufig nicht richtig sitzt und deshalb keine festen frischen Speisen mehr aufgenommen werden können.

Andere, aus dem allgemeinen Stand der Technik bekannte Lösungen, wie der Einsatz von Implantaten, sind jedoch mit größeren chirurgischen Eingriffen verbunden. Bei älteren, kranken oder sonstwie geschwächten Personen wird jedoch häufig vor großen chirurgischen Eingriffen abgeraten, da sie zu größeren gesundheitlichen Problemen führen könnten.

Aus der DE 103 20 474 A1 ist Verbindungselement zwischen abnehmbarem Zahnersatz und zahnärztlichen Implantaten bzw. natürlichen Zähnen oder Zahnwurzeln mit unter sich gehendem Profil zur Lagerung und Retention des Zahnersatzes gezeigt.

In der US 3,327,392 A ist eine Zahnprothese beschrieben, bei der ein künstlicher Zahn mit retentiven Elementen versehen wird, die von einem Silikonmaterial als Ausgangsmaterial hergestellt wird. Durch Zugabe entsprechender Stoffe wird eine Aushärtung des Silikonmaterials erreicht. Ein künstlicher Zahn der Zahnprothese kann dabei über einen Grundkörper befestigt werden, der aus Silikonmaterial mit Acrylsäure besteht.

In der US 2004/0020597 A1 wird ein Klebemittel für auf Silikonmaterial basierende Auskleidungen beschrieben, wobei Zielsetzung insbesondere die lange Haltbarkeit der Klebeverbindung ist.

Ein Problem besteht darin, einen kostengünstigen und einfachen Weg aufzuzeigen, um eine Zahnprothese zuverlässig zu befestigen.

Es ist daher Aufgabe der Erfindung, eine Zahnprothese mit einer Befestigungsvorrichtung anzugeben, mit der eine festsitzende Zahnprothese auf komfortable Weise geschaffen wird, ohne dabei größere chirurgische Eingriffe durchführen zu müssen.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung charakterisiert und spezifiziert die Erfindung zusätzlich.

Gemäß der Erfindung wird eine Zahnprothese mit Befestigungsvorrichtung geschaffen, die einen oder mehrere retentive Bereiche umfasst, in denen eine Ausnehmung gebildet ist, die mit einem Silikonmaterial ausgekleidet ist, wobei die Ausnehmung geeignet ist, einen Implantatstift aufzunehmen, wobei das Silikonmaterial so gewählt ist, dass eine vorbestimmte Haftkraft der Zahnprothese durch Einstellen der Härte des Silikonmaterials mittels Zugabe von Kieselsäure vor dem Aushärten erfolgt ist.

Aufgrund der mit dem Silikonmaterial ausgekleideten Ausnehmung wird ein hoher Kaukomfort geschaffen, da das nachgiebige Silikonmaterial einen spürbar nachgiebigen Aufbiss erzeugt. Die vorbestimmte Haftkraft der Zahnprothese hält die Prothese stabil in ihrer Position. Folglich wird ein hoher Komfort beim Tragen der Zahnprothese erreicht, so dass sowohl die Aufnahme von Nahrung mit dem damit verbundenen Kauvorgang möglich ist, als auch eine stabile Fixierung der Prothese erreicht wird.

Silikonmaterial weist eine hohe Reißfestigkeit auf, so dass es für eine resiliente Lagerung der Zahnprothese geeignet ist. Aufgrund der einstellbaren Härte des Silikonmaterials wird eine festsitzende Prothese geschaffen, wobei sich gezeigt hat, dass die Haftkräfte bei einer gegebenen Härte des Silikonmaterials sehr eng um einen Medianwert liegen und auch bei zehnjähriger Benutzung, was etwa 10.000 bis 12.000 Zyklen des Herein- und Herausnehmens der Zahnprothese entspricht, nur unwesentlich reduziert werden. So wird beispielsweise eine anfängliche Abzugskraft von 7 N, die zu Beginn der Untersuchung im Bereich von 6,5 bis 7,5 N variiert, nach 11.000 Abzügen der Zahnprothese auf etwa 5,5 N reduziert, ohne dass dabei eine deutliche Aufweitung der Streuung der Abzugskräfte beobachtet wurde. Folglich wird der einmal erreichte Tragekomfort über längere Zeit gewährleistet, so dass insgesamt eine einfache und kostengünstige Lösung zur Befestigung einer Zahnprothese geschaffen wurde.

Gemäß einer weiteren Ausführungsform der Erfindung ist die Ausnehmung geeignet, einen Implantatstift aufzunehmen.

Der Implantatstift kann als ein Abutmentsystem bereit gestellt werden, der eine definierte Retention und eine gute Führung der Zahnprothese bewirkt. Der Implantatstift kann durch verschiedene Angulationen einen vorhandenen Restknochen möglichst optimal ausnutzen, so dass aufwändige chirurgische Eingriffe vermieden werden. Ebenso ist es möglich, den Implantatstift mit verschiedenen Höhen bereit zu stellen, so dass der Platzbedarf der Zahnprothese an die anatomischen Bedürfnisse angepaßt werden kann.

Gemäß einer weiteren Ausführungsform der Erfindung ist die Zahnprothese eine Totalprothese.

Die Totalprothese kann mit der Ausnehmung beispielsweise durch Fräsen versehen werden, in die das Silikonmaterial eingebracht wird. Mittels eines Fräsers kann das ausgehärtete Silikonmaterial mit der gewünschten Abzugskraft appliziert werden. Demgemäß ist es möglich, den Patienten mit einer festsitzenden Zahnprothese zu versorgen, die keine aufwändigen Laborarbeiten erfordert sondern vollständig während der Behandlung auf dem Zahnarztstuhl angepasst werden kann. Dies erhöht die Lebensqualität von vielen zahnlosen älteren Menschen bei überschaubaren Kosten deutlich.

Gemäß einer weiteren Ausführungsform der Erfindung ist die Ausnehmung geeignet, eine teleskopische Brücke aufzunehmen.

Gemäß dieser Ausführungsform wird die Befestigungsvorrichtung nicht für eine Vollprothese verwendet, sondern für eine teleskopische Brücke. Bei einer teleskopischen Brücke werden vorhandene Zähne stiftartig abgeschliffen, so dass wenigstens zwei Haltepunkte geschaffen werden, die einen zahnlosen Bereich überbrücken können. Häufig ist jedoch zu beobachten, dass einer der beiden Haltepunkte im Laufe der Zeit ebenfalls verloren geht, so dass die teleskopische Brücke nicht mehr verwendet werden kann. Durch Einsatz eines Implantats an der Stelle des verloren gegangene Haltepunkts und Verwendung der erfindungsgemäßen Befestigungsvorrichtung, bei der das Silikonmaterial einen weichen Zwischenbereich bildet, kann die teleskopische Brücke weiterhin verwendet werden, so dass eine aufwändige chirurgische Behandlung vermieden werden kann und desweiteren Kosten eingespart werden können.

Gemäß einer weiteren Ausführungsform ist das Silikonmaterial eingefärbt, um unterschiedliche Haltekräfte zu signalisieren.

Demgemäß ist es möglich, dass das zahnärztliche Personal über die ausgewählte Haltekraft jederzeit informiert ist, so dass eventuelle Änderungen der Zahnprothese ohne aufwändige Neuuntersuchungen durchgeführt werden können.

Gemäß einer weiteren Ausführungsform der Erfindung ist die Haftkraft in drei Bereichen zwischen 1 N bis 10 N auswählbar.

In diesen Bereichen werden oftmals Abzugskräfte gewählt, so dass sich zum einen eine festsitzende Prothese ergibt, mit der ein Kauvorgang möglich ist, aber dennoch eine Entnahme der Zahnprothese erreicht werden kann.

Nachfolgend werden einige Ausführungsbeispiele anhand der Zeichnungen näher erläutert. Es zeigen:
- Fig. 1: eine Totalprothese in einer Querschnittsansicht,
- Fig. 2: die Totalprothese aus Fig. 1 mit einem Implantatstift in einem Kieferknochen in einer Querschnittsansicht,
- Fig. 3: ein Diagramm verschiedener Abzugskräfte in Abhängigkeit der Anzahl von Abzugsversuchen.

In den Figuren sind gleiche oder funktional gleich wirkende Bauteile mit den gleichen Bezugszeichen versehen.

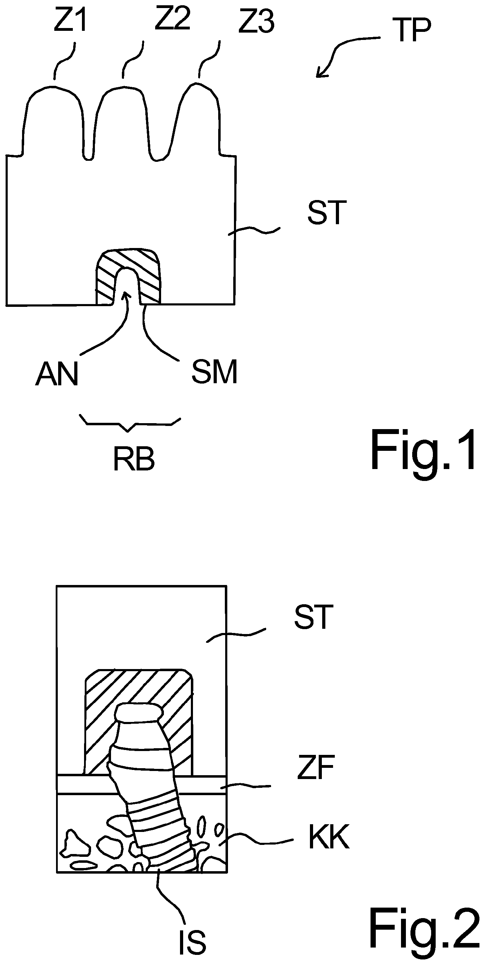

In Fig. 1 ist eine Totalprothese in einer Querschnittsansicht gezeigt, bei der die erfindungsgemäße Befestigungsvorrichtung zum Einsatz kommt. Die Befestigungsvorrichtung bildet einen retentiven Bereich RB, der zur Befestigung der Zahnprothese herangezogen wird. Die Totalprothese TP umfasst einen sattelförmigen Steg ST, der über den zahnlosen Bereich im Mund des Patienten eingesetzt wird. Auf dem Steg ST sind mehrere Zähne angeordnet, die in Fig. 1 beispielhaft als Zahn Z1, Z2 und Z3 angedeutet sind. Es versteht sich für den kundigen Fachmann jedoch von selbst, dass eine Vielzahl von Zahnkonfigurationen möglich ist, so dass die in Fig. 1 gezeigte Ausführungsform lediglich beispielhaft zu verstehen ist.

Auf der der Kieferknochen zugewandten Seite weist die Totalprothese TP eine Ausnehmung AN auf, die mit einem Silikonmaterial SM ausgekleidet ist. Mittels des Silikonmaterials SM kann eine vorbestimmte Haftkraft eingestellt werden, die durch die Härte des Silikonmaterials SM bestimmt wird. Dies kann beispielsweise durch die Zugabe von Kieselsäure vor dem Aushärten des Silikonmaterials SM erreicht werden. Die Haftkraft läßt sich beispielsweise im Bereich zwischen 1 N bis 10 N auswählen, wobei das Silikonmaterial als konfigurierte Mischung bereit gestellt werden kann, so dass beispielsweise drei Teilbereiche vom Behandlungspersonal ausgewählt werden können. Die Verwendung des jeweiligen Teilbereichs kann beispielsweise dadurch gekennzeichnet werden, dass das Silikonmaterial für jeden Teilbereich mit einer anderen Einfärbung versehen wird.

Das Aufbringen der Totalprothese TP ist in Fig. 2 nochmals ausführlicher erläutert. Wie Fig. 2 zu entnehmen ist, wird ein Kieferknochen KK, der auf seiner Oberseite ein Zahnfleisch ZF aufweist, mit einem Implantatstift IS versehen. Der Implantatstift IS reicht dabei in den Mundraum des Patienten und kann, wie in Fig. 2 gezeigt ist, mit unterschiedlichen Angulationen bereit gestellt werden, um den vorhandenen Restknochenbestand des Patienten optimal ausnutzen zu können. Auf seiner Oberseite wird der Implantatstift IS in dem retentiven Bereich RB eingeführt.

Üblicherweise wird bei der Behandlung eines Patienten zuerst die Totalprothese TP bereit gestellt. Diese kann auf ihrer Innenseite, d. h. der dem Kieferknochen KK zu weisenden Seite, mit einem dünnfließenden Abdruckmaterial versehen werden, so dass die Position der Implantatstifte IS lokalisiert werden kann. An den nunmehr markierten Stellen wird die Totalprothese TP basal ausgeschliffen. Nachdem der somit gebildete Hohlraum oder Ausnehmung mit einem entsprechenden Flüssigsilikon konditioniert wurde, wird das Silikonmaterial SM mit der gewünschten Härte bis zur Oberkante des Hohlraums eingefüllt. Die Totalprothese wird im Silikonmaterial SM über die Implantatstifte IS eingesetzt. Der Patient schließt den Mund und fixiert die Totalprothese unter leichtem Kaudruck.

Nach einiger Zeit, beispielsweise nach drei Minuten, wird die Totalprothese ausgegliedert und der Überschuss des Silikonmaterials wird mit einem Silikonfräser entfernt. Wie bereits oben erwähnt, kann das Silikonmaterial mit unterschiedlichen Haftkräften und damit mit unterschiedlichen Abzugswerten für die Totalprothese bereit gestellt werden, wobei es auch möglich ist, je nach Bedarf oder Patientenwunsch, das Silikonmaterial auszutauschen.

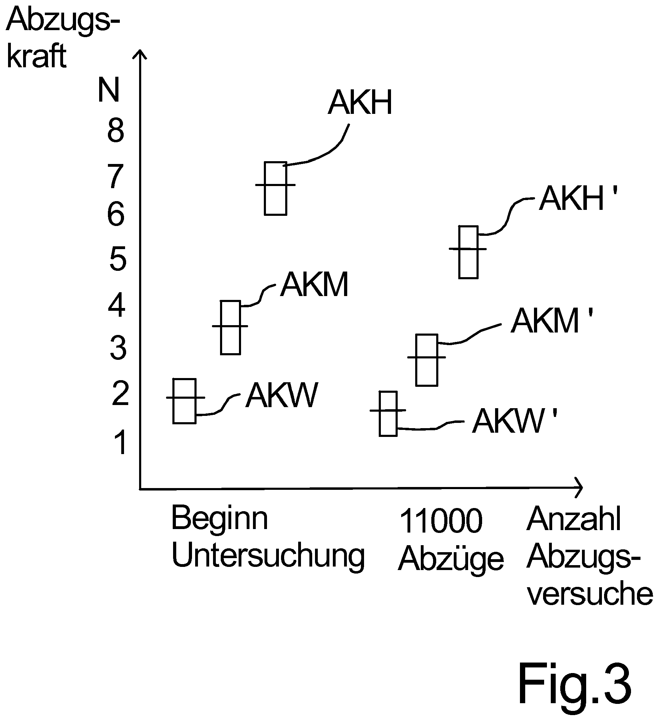

Unter Bezugnahme auf Fig. 3 werden folgende Laborversuche vorgestellt, die die Entwicklung der Abzugskraft über mehrere Abzugszyklen zeigen. In Fig. 3 ist für drei verschiedene Haftkräfte jeweils die Abzugskraft zu Beginn der Untersuchung und nach 11.000 Abzügen, die etwa 10 Jahre Tragedauer entsprechen, gezeigt.

Die ersten Messwerte zeigen die Abzugskraft AKH für eine harte Silikonmaterialmischung. Diese liegt etwa im Bereich von 7 N und streut nur in einem geringen Bereich, so dass die Abzugskräfte sehr eng um den Mittelwert liegen. Die zweite Messwertgruppe zeigt die Abzugskräfte AKM, die einem mittleren Härtegrad entsprechen und die dritte Gruppe zeigt eine geringe Abzugskraft AKW, die mit einem weichen Silikonmaterial realisiert wurden. Die Abzugskräfte AKH, AKM, AKW entsprechen dabei jeweils den Werten zu Beginn der Untersuchung. Die in Fig. 3 gezeigten Abzugskräfte AKH', AKM' und AKW' entsprechen den Abzugskräften nach einer Anzahl von Abzugsversuchen, die in diesem Beispiel etwa einer Tragedauer von 10 Jahren entspricht.

Gemäß der Erfindung wird eine Befestigungsvorrichtung geschaffen, die eine definierte Abzugskraft bei gleichzeitig guter Führung der Totalprothese schafft und hohem Patientenkomfort beim Essen und Kauen in stabiler Position ermöglicht.

Die Befestigungsvorrichtung ist jedoch nicht auf die Anwendung auf Totalprothesen beschränkt. So ist es beispielsweise möglich, die mit dem Silikonmaterial ausgekleidete Ausnehmung auch in anderen zahnprothetischen Aufbauten zu verwenden.

Ein Beispiel könnte die Verwendung mit einer teleskopischen Brücke sein, bei der vorhandene Zähne stiftartig abgeschliffen werden, um entsprechende Haltepunkte für eine Zahnprothese zu schaffen. Sollte eine der beiden Haltepunkte jedoch im Laufe der Zeit aufgrund fortschreitender Degradierung ebenfalls verloren gehen, so kann mittels eines Einsatzes eines Implantats oder durch Nachschleifen des noch vorhandenen Zahns die vorhandene teleskopische Brücke dennoch verwendet werden, ohne sie austauschen zu müssen. Das Silikonmaterial überbrückt dabei zwischen der innerhalb der teleskopischen Brücke gebildeten Ausnehmung und dem stiftartigen Zahnbereich bzw. dem Implantat.

## Patentansprüche

1. Zahnprothese mit Befestigungsvorrichtung, die einen oder mehrere retentive Bereiche (RB) umfasst, in denen eine Ausnehmung (AN) gebildet ist, die mit einem Silikonmaterial (SM) ausgekleidet ist, wobei die Ausnehmung (AN) geeignet ist, einen Implantatstift (IS) aufzunehmen, wobei das Silikonmaterial (SM) so gewählt ist, dass eine vorbestimmte Haftkraft der Zahnprothese durch Einstellen der Härte des Silikonmaterials (SM) mittels Zugabe von Kieselsäure vor dem Aushärten erfolgt ist.

2. Zahnprothese nach Anspruch 1, bei der die Zahnprothese eine Totalprothese (TP) ist.

3. Zahnprothese nach Anspruch 1, bei der die Zahnprothese eine teleskopierbare Brücke ist.

## Claims

1. Dental prosthesis with fastening device, comprising one or more retentive regions (RB) in which a recess (AN) is formed which is lined with a silicone material (SM), wherein the recess (AN) is suitable for receiving an implant pin (IS), wherein the silicone material (SM) is chosen such that a predetermined adherence of the dental prosthesis is set by adjusting the hardness of the silicone material (SM) by means of addition of silicic acid prior to curing.

2. Dental prosthesis according to Claim 1, in which the dental prosthesis is a total prosthesis (TP).

3. Dental prosthesis according to Claim 1, in which the dental prosthesis is a telescopic bridge.

## Revendications

1. Prothèse dentaire avec un dispositif de fixation qui comprend une ou plusieurs régions de rétention (RB) dans lesquelles est formé un évidement (AN) qui est revêtu d'un matériau à base de silicone (SM), l'évidement (AN) étant prévu pour recevoir une broche d'implant (IS), le matériau à base de silicone (SM) étant choisi de telle sorte qu'une force d'adhésion prédéterminée de la prothèse dentaire soit obtenue par ajustement de la dureté du matériau à base de silicone (SM) au moyen d'un ajout d'acide silicique avant le durcissement.

2. Prothèse dentaire selon la revendication 1, la prothèse dentaire étant une prothèse totale (TP).

3. Prothèse dentaire selon la revendication 1, la prothèse dentaire étant un bridge télescopable.
